# EUROPÄISCHE PATENTANMELDUNG

(11) **EP 2 568 000 A1**
(43) Veröffentlichungstag der Anmeldung: **13.03.2013**
(21) Anmeldenummer: 12183300.8
(22) Anmeldetag: 06.09.2012
(51) Int. Cl.: C08J 5/18, C08J 11/06, B29B 17/00

(54) **Polymer-Compoundmaterial**

(30) Priorität: 28.10.2011 DE 102011054905; 06.09.2011 DE 102011053321
(71) Anmelder: HPX Polymers GmbH, 85244 Röhrmoos (DE)
(72) Erfinder: Bölz, Dr. Dr. Uwe, 85244 Röhrmoos (DE)
(74) Vertreter: Bauer Vorberg Kayser Patentanwälte

(57) **Zusammenfassung**

Die Erfindung betrifft ein Polymer-Compoundmaterial (20) für hochwertige Kunststoff-Anwendungen, gebildet aus einem innenliegenden rezykliertem Kunststoffmaterial (24), umgeben von einem Matrixpolymermaterial (22) aus Polymer-Neuware.

Die Erfindung betrifft weiterhin ein Verfahren zur Herstellung eines solchen mehrkomponentigen und mehrphasigen Polymer-Compoundmaterials (20).

## Beschreibung

Die vorliegende Erfindung betrifft ein Polymer-Compoundmaterial für hochwertige Kunststoff-Anwendungen.

Derartige Kunststoffmaterialien können insbesondere für blasgeformte Behälter zur Verpackung flüssiger Consumer-Produkten (Kosmetika, Reinigungs- und Körperpflegeprodukte & Lebensmittel), Mehrschichtfolien bzw. -platten und für diverse Spritzgussartikel wie Brotboxen, Schneidbretter oder Salatbesteck eingesetzt werden. Zumeist ist aufgrund der eindeutig definierten Zusammensetzung aus reinen Polymeren und Zuschlagsstoffen der Einsatz in direktem Lebensmittelkontakt möglich.

Eine wesentliche Anforderung an Verpackungsmaterialien für Lebensmittel, Kosmetika und Körperpflegeprodukte besteht darin, dass die Verpackung möglichst wasserdicht, fettdicht und auch geruchsdicht sein soll und hinsichtlich Migration und Inhaltstoffen die strengen Lebensmittelrichtlinien erfüllt.

Bisher genutzte Produktionsabfälle aus Kunststoff werden entweder sortenrein direkt am Ende des Herstellungsprozesses direkt im Prozess zurückgeführt oder gesammelt (z. B. Angüsse beim Spritzgiessen oder Randbeschnitt bei der Folienherstellung) und nach evtl. notwendigem Zerkleinerungsschritt in definierter Zumischung zur Neuware erneut dem Produktionsprozess zugeführt. Da sich die Anteile so genutzter Abfälle in der Regel im niedrigen einstelligen Prozentbereich bewegen, werden die Eigenschaften des Basispolymers und des damit hergestellten Produktes dadurch kaum messbar beeinflusst.

Die zugemischten Anteile bestehen bei dieser Art der direkten Rückführung in den Produktionsprozess aus identischem Polymermaterial, das maximal aufgrund thermischer Degradation im Molgewicht verändert ist und dadurch auch ggf. zusätzlich kürzerkettige thermische Abbauprodukte des Polymers enthält.

Alternativ werden nicht direkt rückführbare aber sortenreine Abfälle wie Spülbatzen, Stanzgitter, nicht qualitätskonforme Produkte und sonstige Bearbeitungsreste und reklamierte Rückläufer nach Polymertypen sortiert gesammelt, eingemahlen und in dieser oder regranulierter Form als "B-Ware" von Kunststoff-Verarbeitern für meist minderwertigere Anwendungen (Mulch- und Deponiefolien, Spritzgussartikel für technische Anwendungen, Sekundärverpackungen) eingesetzt.

Aufgrund ständig steigender Rohstoffpreise ist dafür mittlerweile ein recht gut funktionierender Sekundär-Markt entstanden. Problematisch sind jedoch die aufgrund sehr unterschiedlicher Mengen und Herkunft der Quellen recht stark schwankenden Eigenschaftsprofile, ebensolcher Verfügbarkeiten und oft vorhandenen anhaftenden Verschmutzungen mit Fremdmaterialien.

Qualitativ noch minderwertigere gemischte Kunststoffreste werden unter anderem auch aus Sortierungen der gelben Tonnen (DSD) bzw. der Wertstoffsammlungen gewonnen und wegen zu großer Mengen für die möglichen Anwendungsbereiche oft thermisch (z. B. als Erdölersatz bei der Stahl- bzw. Betonherstellung) verwertet. Diese Kunststoffreste sind deswegen minderwertig, weil sie aus teilweise unverträglichen Mehrstoffgemischen bestehen und aufgrund ungenügender Werkstoffeigenschaften nur für dickwandige Bauteile wie Paletten, Parkbänke und Bahnschwellen bedingt einsetzbar und entsprechend kritisch zu verarbeiten sind. Sie werden preislich daher weit unter Einstandspreisen für Neuware gehandelt.

Der vorliegenden Erfindung liegt die Aufgabe zugrunde, ein Polymer-Compoundmaterial bereitzustellen, das trotz mengenmäßig hohen Bestandteilen von nicht trennbaren Mehrstoffgemischen aus Mehrschichtverbunden bzw. Mehrschichtfolien, -behältern und/oder Ver- bzw. Bearbeitungsabfälle dieser Mehrstoffprodukte, definierte Eigenschaften, eine konstante Verarbeitbarkeit und eine hohe Reinheit aufweist. Das Polymer-Compoundmaterial soll insbesondere auch für einen Einsatz in direktem Kontakt zu Lebensmitteln geeignet sein. Die Herstellung soll ohne großen Sortier- und Trennaufwand und damit kostengünstig möglich sein.

Die Aufgabe umfasst weiterhin auch die Bereitstellung eines Verfahrens zur Herstellung eines derartigen Polymer-Compoundmaterials.

Gelöst wird die Aufgabe durch ein Polymer-Compoundmaterial mit den Merkmalen des Patentanspruchs 1 sowie durch ein Verfahren mit den Verfahrensschritten gemäß Patentanspruch 13.

Demnach wird das Polymer-Compoundmaterial aus einem innenliegenden homogen dispers verteilten rezyklierten Kunststoffmaterial (oder auch Kunststoffmaterialgemisch) gebildet, das von einem kontinuierlichen Matrixpolymermaterial aus Polymer-Neuware umgeben ist.

Das Polymer-Compoundmaterial weist erfindungsgemäß als rezykliertes Kunststoffmaterial hohe Anteile nicht direkt wieder einsetzbarer Produktionsreststoffe auf. Diese Produktionsreststoffe können beispielsweise aus folgenden Materialgruppen stammen:
- Gemischen aus teilverträglichen bis partiell unverträglichen schmelzbaren Polymeren inkl. Haftvermittlerschichten (zum Beispiel Mehrschichtbarrierefolien bzw. -behälter),
- Verbundfolien (z. B. PET-Alu-PE, PET-Alu-PET-PE usw.)
- Anvernetzte Kunststoffe bzw. Kunststoffgemische (z. B. PMMA, PU, Polyester, EPDM)

Der Begriff "teilverträglich" bis partiell unverträglich meint in diesem Zusammenhang, dass die entsprechenden Kunststoffe miteinander mindestens partiell mischbare Kettenabschnitte bzw. Komponenten besitzen oder über Haftvermittler mit diesen Eigenschaften im aufgeschmolzen Zustand als homogene Schmelze verarbeitet werden können. Entsprechende Kunststoffgemische können miteinander homogen ohne erkennbare Phasentrennung aufgeschmolzen werden.

Erfindungsgemäß werden direkt im Herstellungs-, Verarbeitungs- oder Bearbeitungsprozess entstehende Abfälle ohne anhaftende Verschmutzungen gesammelt, verpackt und eindeutig gekennzeichnet. In einem zweiten Schritt werden aus diesen sauberen Reststoffen mit definierter Zusammensetzung durch geeignetes Mischen mit Polymerneuware partiell heterogene Gemische hergestellt, die qualitativ mit marktüblichen Compounds mithalten können oder sie in einigen Bereichen sogar noch übertreffen und das bei je nach Rezyklatanteil und Einstandspreis für die Neuware deutlich geringeren Herstellungskosten (mindestens 20% unter Neuware).

Die Mischungen werden grundsätzlich immer so eingestellt, dass die Rezyklatanteile vollständig und möglichst homogen im Matrixpolymermaterial verteilt eingebettet werden. Laut Blend-Theorie für zwei und mehrere Komponenten ist das um so besser möglich, je niedrigviskoser die Matrixkomponente ist und je besser sie die eingebetteten Komponente(n) benetzen kann.

Üblicherweise geforderte Anforderungen für den direkten Kontakt mit Lebensmitteln, beispielsweise Wasser-, Fett- und Geruchsdichtigkeit, sowie ein geringer Anteil an migrierenden Bestandteilen kann problemlos erfüllt werden, da sich erfindungsgemäß an der Außenseite des Polymer-Compoundmaterials ausschließlich reines Matrixpolymermaterial befindet, das rezyklierte Kunststoffmaterial kommt demnach mit den Lebensmitteln nicht in Kontakt.

Im Gegensatz zu Produkten des Standes der Technik (100% Neuware) ermöglicht das vorgestellte Polymer-Compoundmaterial durch seinen hohen Anteil wiederverwerteter, d. h. schon einmal verwendeter Rohstoffe, einen insgesamt sehr niedrigen Energie- und Rohstoffeinsatz (= CO₂-Fußabdruck) für das damit hergestellte Produkt und ist damit sehr resourcenschonend und umweltfreundlich.

Der Grundgedanke der Erfindung basiert im Wesentlichen darauf, die "klassischen" Blendpartner bzw. "Zuschlagstoffe" in einem Polymerblend bzw. Polymercompound durch einen definiert zusammengesetzten, sauberen Reststoff zu ersetzen und durch weitere Zusätze optimal für die Anwendung einzustellen.

Erfindungsgemäß ist auch die Einarbeitung von bedruckten Hochleistungs-Barriere-Folienverbunden wie PET-Alu-PE, die u. a. für die Verpackung von Getränken mit sehr langer Mindesthaltbarkeitsdauer eingesetzt werden (z.B. Capri-Sonne®) möglich, wodurch die Herstellung von Farbeffekt-Mischungen mit Alu-Partikeln, wie sie sonst nur mittels Einarbeitung sehr kostspieliger Effektfarben-Additive (Preise bis zu 300€/kg und mehr) auf z. B. Glimmerbasis möglich sind, realisiert werden kann.

Das rezyklierte Kunststoffmaterial kann einer der nachfolgenden Gruppen zugeordnet werden:
- mit dem Matrixpolymermaterial partiell verträglicher Kunststoff oder Kunststoffgemisch,
- mit dem Matrixpolymermaterial unverträglicher Kunststoff oder Kunststoffgemisch,
- vernetztes Polymermaterial (sortenrein oder gemischt),
- anvernetzes Polymermaterial (sortenrein oder gemischt)
- physikalisch/chemisch untrennbares oder verfahrenstechnisch nicht einfach (z. B. mechanisch) trennbares Kunststoffverbundmaterial.

Erfindungsgemäß kann das rezyklierte Kunststoffmaterial auch aus einer Mischung von zwei oder mehr der oben genannten Materialien bestehen.

Durch geeignete Prozessführung (ggf auch mehrstufig) lassen sich kleinteilige gut zu dosierende Stanzabfälle (2 bis 30mm Durchmesser) mit bis zu 70 Gew.% für Extrusionsanwendungen (Folien, Platten. Behälter) bzw. bis zu 90% (für Spritzguss und Formpressen) in leichtfließende thermoplastische Kunststoffe mit Standarddoppelschneckenextrudern einarbeiten. Für noch höhere Füllgrade kommen erfindungsgemäß noch leichter fließende vernetzbare Kunststoffgemische (1 oder 2K-Giessharze auf Polyester-, Styrol-, Epoxi-, Silikon- oder Polyurethanbasis) in Frage.

Es hat sich auch gezeigt, dass eine wesentliche Eigenschaft des Polymer-Compoundmaterials darin besteht, dass dieses aufgrund der hohen Anteile recht steifer Verbundwerkstoffe meist eine höhere Gesamtsteifigkeit, geringeres Schrumpfverhalten, bessere Barrierewerte und ggf. (z. B. bei Zugabe von mineralischen Zuschlagsstoffen) eine höhere Dichte besitzt. Diese ist insbesondere dann von Vorteil, wenn hochwertig anmutende Produkte (Steinimitate für Tischplatten, Blumentöpfe bzw. -kübel oder Waschbecken/Arbeitsplatten) damit gefertigt werden. Für den Benutzer ist die Kunststoffbasis dieser Werkstoffe aufgrund der homogen verteilt gut sichtbaren Aluminiumflitter nicht leicht erkennbar.

Erfindungsgemäß kann das Polymer-Compoundmaterial weitere Additive aufweisen, die die Materialeigenschaften und/oder das äußere Erscheinungsbild beeinflussen. Beispielsweise kann ein mineralischer Füllstoff beim Mischvorgang zugegeben werden, welcher die Dichte erhöht. Auch können erfindungsgemäß elektrisch leitfähige Partikel wie Leitruß oder Carbonanotubes als Additive zugesetzt werden, wodurch eine elektromagnetische Abschirmungwirkung und/oder Leitfähigkeit des Compounds ermöglicht wird.

In einer bevorzugten Ausgestaltung der vorliegenden Erfindung werden beim Compoundieren der Kunststoffgemische weitere für die Endanwendung notwendige Additive (UV-Stabilisatoren, Titanoxid zur Weisseinfärbung, Gleitmittel, Antistatika uvm.) gezielt in nur eine Phase z. B. in das Matrixpolymermaterial (Stabilisatoren & Einfärbung) oder die disperse Phase (Weichmacher, Füllstoffe) bereits vor der Vermischung mit dem rezykliertem Kunststoffmaterial zugemischt. So lassen sich die technisch notwendigen Zugabemengen wirksam reduzieren, durch Füllstoff bzw. Weichmacherzugabe in die disperse Phase die Rohstoffkosten weiter senken und Feineinstellungen am Gesamtmaterial realisieren, ohne dass dabei zusätzliche Kosten für diesen Einarbeitungsschritt entstehen oder diese Additive in direkten Kontakt mit dem späteren Füllgut kommen.

Talkum ist beispielsweise ein günstiger mineralischer Rohstoff, der zudem die grundsätzlichen Polymereigenschaften und bei Einarbeitung in Anteilen bis ca. 30% die Fließfähigkeit des zugrunde liegenden Polymers nicht negativ beeinflusst. Beim Scheren der Polymerschmelze bei der Verarbeitung gleiten die plättchenförmigen Partikel aneinander vorbei und behindern somit kaum dessen Fließfähigkeit; beim Siegeln werden sie von der viskosen Schmelze einfach "weggedrückt" und behindern nicht deren homogenes Verschmelzen. Talkum ist zudem für den direkten Kontakt mit Lebensmitteln zugelassen und chemisch inert.

Durch eine dosierte Zugabe von Additiven bzw. Füllstoffen können die Eigenschaften des Polymer-Compoundmaterial explizit an die jeweiligen gewünschten Anforderungen angepasst werden. Auch ist es möglich, durch die Zugabe von Additiven bzw. Füllstoffen die Schmelzefestigkeit des Polymers positiv zu beeinflussen und somit dessen Verdrängung im Verarbeitungsprozess (z. B. bei Mehrschichtaufbauten) zu verhindern.

Auch oberflächliche Klebrigkeit und die Kratzempfindlichkeit von aus dem erfindungsgemäßen Polymer-Compoundmaterial gefertigten Produkten können erfindungsgemäß verringert werden. Die Steifigkeit des Gesamtverbundes wird verbessert und der Anteil an natürlichen Rohstoffen erhöht. Ferner wird hierdurch auch der Anteil an aus petrochemischen Vorstufen erzeugtem Polymer reduziert.

Erfindungsgemäß weist das Matrixpolymermaterial aus Polymer-Neuware eine geringere Viskosität als das rezyklierte Kunststoffmaterial auf. Vorteilhafterweise ist das Basis- bzw. Matrixpolymermaterial leichtfließend (hoher Schmelzindex), hochkristallin (was zu verbesserter Steifigkeit und Barrierewirkung führt) und mäßig bis gut mit dem zu dispergierenden rezykliertem Kunststoffmaterial verträglich, um dieses gut zu benetzen (bei nicht schmelzbaren) bzw. einzubinden und zu dispergieren. Bei zu geringer bzw. zu hoher Verträglichkeit und/oder Viskosität von Matrixpolymermaterial oder rezykliertem Kunststoffmaterial können auch hier mittels gezielt der jeweiligen Phase zugegebener Additive wie Haftvermittler und/oder Füllstoffen noch Anpassungen für eine optimale Mischungseinstellung getroffen werden.

Weiterhin ist erfindungsgemäß vorgesehen, anvernetzte Produktionsabfälle wie z. B. PMMA Polymer-Monomer-Teigmassen bei geringer Anvernetzung dem Compoundieren nur grob vorzerkleinert, bei höherer Vernetzung feingemahlen zugänglich zu machen.

Als Matrixpolymere bieten sich polare und teurere Basispolymere wie Polyester, Polyamid, Polyurethane, Polycarbonat/PMMA und andere Hochleistungspolymere als Matrix an, da sich dann der erhöhte Aufwand zur Vorbehandlung der PMMA-Reste stärker auswirkt, diese Gemische sich in ihren Eigenschaften optimal ergänzen (zäh-hart) und auch von der Oberflächenspannung bzw. Verträglichkeit auch ohne weitere Additive besser harmonieren.

In einer besonders vorteilhaften Ausführungsvariante ist es möglich, eigentlich gegensätzliche Eigenschaften über diese Polymer-Mischungen zu kombinieren. Eine zäh-elastische anvernetzte, also gummiähnliche Phase wird erfindungsgemäß feindispers in hohen Anteilen (60 - 80%) in einer recht hochkristallinen, leichtfließenden Matrix homogen eingebettet und dabei über Zugabe weiterer Vernetzungsadditive engmaschig zu vernetzen. Dadurch lassen sich hochelastische gummiähnliche und doch recht leicht thermoplastisch zu verarbeitende Spezialblends sogenannte TPE's (thermoplastische Elastomere) erzeugen.

Das erfindungsgemäße Verfahren zur Herstellung des erfindungsgemäßen Polymer-Compoundmaterials weist vorteilhafterweise die folgenden Verfahrensschritte auf:
- Bereitstellen geeigneter Basispolymere und gut dosierbarer Rezyklate bzw. Rezyklatgemische,
- Homogenes Einmischen und Benetzen der Rezyklatanteile in einem kontinuierlichen Verfahren,
- Granulierung zu einem gleichmäßigen, rieselfähigen Granulat

Insbesondere das homogenes Einmischen der Rezyklatanteile in einem kontinuierlichen Verfahren bzw. das Mischen des Matrixpolymermaterials aus Polymer-Neuware mit dem Kunststoffmaterial in einem kontinuierlichen Prozess ermöglicht die wirtschaftliche Herstellung des Polymer-Compoundmaterials.

Werden nicht schmelzbare rezyklierte Kunststoffmaterialien verwendet, können das Matrixpolymermaterial und das Kunststoffmaterial in einer Direktmischung unmittelbar miteinander vermischt werden. In einer besonders vorteilhaften Variante ist aber auch ein zweistufiger Prozess möglich. In einem ersten Verfahrensschritt wird das Matrixpolymermaterial mit einem Anteil von bis zu etwa 40 bis 60%, vorzugsweise 50% des rezyklierten Kunststoffmaterials vermischt. Ebenfalls können in diesem ersten Verfahrensschritt Additive, wie Farbstoffe oder Stabilisatoren hinzugegeben werden. Etwa 10 bis 40, vorzugsweise 20 bis 30 Sekunden später wird in diese erste "Vor-Mischung" aus Gründen der besseren Einmischung der restliche Anteil an Füllstoff bzw. Kunststoffmaterial hinzugegeben und die endgültige Mischung erzeugt. Vorzugsweise wird die endgültige Mischung anschließend in teilgefüllten Schneckenbereichen entgast.

Erfindungsgemäß können auch mehrere Zugabemöglichkeiten vorgesehen sein, über die bestimmte Anteile an Kunststoffmaterial oder auch feste oder flüssige Additive hinzugegeben und eingemischt werden können. Dies kann je nach Endprodukt sinnvoll sein, da somit beispielsweise eine Vorhomogenisierung vor Zugabe des jeweils nächsten Zugabestoffs erfolgen kann.

Die Herstellung des Polymer-Compoundmaterials unter Verwendung von schmelzbaren rezyklierten Kunststoffmaterialien kann sich erfindungsgemäß von dem Verfahren für die nicht schmelzbaren Mehrstoffgemische unterscheiden. In einem ersten Verfahrensschritt wird das rezyklierte Kunststoffmaterial gegebenenfalls unter Hinzugabe von weiteren Additiven, aufgeschmolzen. In einem zweiten Verfahrensschritt wird Matrixpolymermaterial, ggf. ebenfalls unter Hinzugabe von Additiven, aufgeschmolzen und dem bereits zuvor aufgeschmolzenen Kunststoffmaterial hinzugefügt. Nach einer entsprechenden Vermischung der beiden Komponenten erfolgt auch bei diesem Verfahren in einem Bereich teilgefüllter Schneckenzonen vorteilhafterweise eine atmosphärische oder Vakuumentgasung zur Entfernung eingebrachter Luft bzw. flüchtiger Anteile. Erfindungsgemäß können weitere Zugabemöglichkeiten bestehen, um die Mischung an entsprechende Anforderungen anpassen zu können. Denkbar ist beispielsweise, dass die Additive nicht gleichzeitig mit dem rezyklierten Kunststoffmaterial oder dem Matrixpolymermaterial aufgeschmolzen, sondern in einem jeweils zusätzlichen Verfahrensschritt oder flüssig über eine Pumpe hinzugefügt werden. Dies gilt auch für das Verfahren unter Verwendung von nicht schmelzbaren Kunststoffmaterialien.

Es hat sich gezeigt, dass bei den gängigen Polyolefinen eine Schmelztemperatur von 180 bis 250° C, vorzugsweise 200 bis 220° C, ausreicht und geeignet ist, sowohl das eingearbeitete Kunststoffmaterial als auch das Matrixpolymermaterial sicher und vollständig aufzuschmelzen. Bei anvernetzten Komponenten bzw. höher schmelzenden basispolymeren wie Polyamid müssen entsprechend höhere Verarbeitungstemperaturen (240 - 280°C) eingestellt werden.

Für die Herstellung eignen sich insbesondere dichtkämmende ZweischneckenExtruder oder alternative ein Buss-Cokneter. Ein L/D-Verhältniss von 25 oder mehr hat sich als ausreichend erwiesen.

Die Erfindung macht sich die Eigenschaft zunutze, dass aufgrund der rheologischen Effekte in einer Polymerschmelze beim Schmelzetransport im Extruder unter Scheren und Dehnen der Schmelze das leichter fließende Material stets nach außen transportiert wird und somit das leicht fließende Matrixpolymermaterial im Endprodukt stets außen angeordnet ist.

Erfindungsgemäß ist auch die Verwendung von sogenannten bimodalen Reaktorblends möglich, die in klassischen Verarbeitungsprozessen nicht trennbar sind, aber ideale leichtfließende und trotzdem hochsteife Matrixkomponenten darstellen und mit vielen Polyolefinen partiell mischbar sind.

Je nach Anwendungsfall kann die Endmischung in ein rieselfähiges Granulat überführt werden.

Die nachfolgende Figurenbeschreibung und die Patentansprüche beinhalten weitere erfindungsgemäße Merkmale und Eigenschaften, die in technisch und chemisch sinnvoller Weise miteinander kombinierbar sind.

Die Figuren verdeutlichen die Erfindung. Es wird explizit darauf hingewiesen, dass die gezeigten Größenverhältnisse nur der Anschauung dienen, je nach Anforderung an das Kunststoffmaterial können diese auch anders sein.

Es zeigen:
- Fig. 1:: eine Prinzipdarstellung eines erfindungsgemäßen Kunststoffgemisches mit einem hohen Anteil an zugemischtem schmelzbarem rezyklierten Kunststoffmaterial,
- Fig. 2:: eine vereinfachte Prinzipdarstellung eines erfindungsgemäßen Kunststoffgemisches mit einem hohen Anteil an zugemischtem nicht-schmelzbarem rezyklierten Kunststoffmaterial.,
- Fig. 3:: eine vereinfachte Prinzipdarstellung eines erfindungsgemäßen Kunststoffgemisches mit hohen Anteilen zugemischten teilvernetzten rezyklierten Kunststoffmaterials.

Die drei Figuren zeigen das erfindungsgemäße Polymer-Compoundmaterial 20 in stark vereinfachter Darstellung im Querschnitt. Insbesondere die Größen- und Mengenverhältnisse sind nicht maßstäblich, sondern sollen lediglich die Inhaltsstoffe darstellen und verdeutlichen. Die drei Figuren zeigen jeweils einen Querschnitt durch ein Folienmaterial bzw. eine Folie, die aus dem erfindungsgemäßen Polymer-Compoundmaterial 20 gebildet ist. Die Folie weist eine Stärke von etwa 30 µm auf.

In allen Ausführungsformen weist das erfindungsgemäße Polymer-Compoundmaterial 20 ein Matrixpolymermaterial 22 auf, in das innenliegend rezykliertes Kunststoffmaterial 24 eingebettet ist. An den Außenflächen des Polymer-Compoundmaterials 20 ist stets Matrixpolymermaterial 22 angeordnet, in den Figuren also an einer Oberseite 26 und einer Unterseite 28.

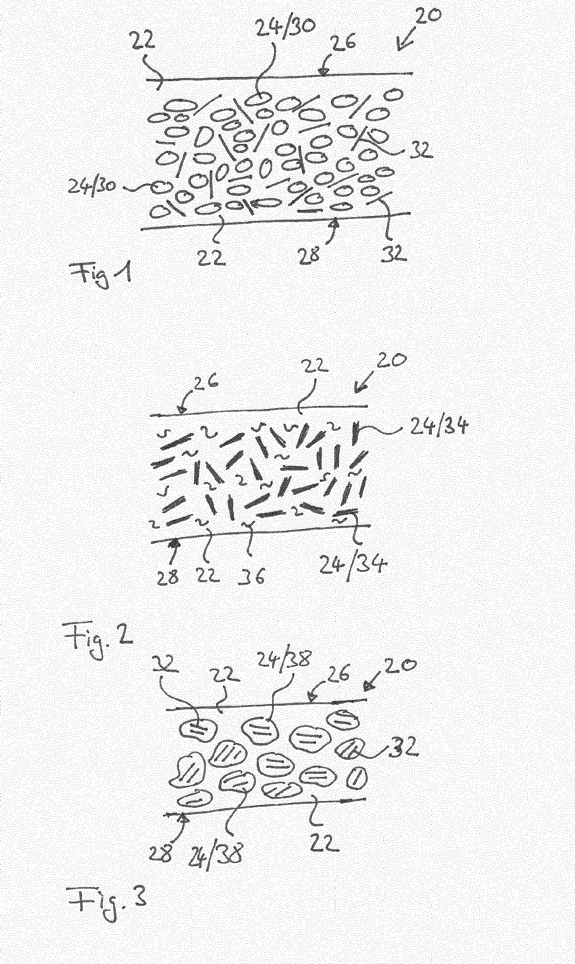

In der Ausführungsform gemäß Figur 1 ist schmelzbares rezykliertes Kunststoffmaterial 30 zugemischt. Dieses ist homogen bzw. dispers im Matrixpolymermaterial 22 verteilt. Weiterhin sind als additiv Talkumpartikel 32 erkennbar, die eine plättchenartige Forum aufweisen.

Figur 2 zeigt ein zweites erfindungsgemäßes Polymer-Compoundmaterial 20, dass nicht-schmelzbares rezykliertes Kunststoffmaterial 34 aufweist. Dieses ist ebenfalls homogen bzw. dispers innerhalb des Matrixpolymermaterials 22 verteilt, wobei auch bei dieser Ausführung an den Außenflächen stets Matrixpolymermaterial 22 angeordnet ist. Im gezeigten Ausführungsbeispiel ist das nicht-schmelzbare Kunststoffmaterial 34 durch Verbund-Folienpartikel gebildet. Weiterhin sind Aluminiumpartikel 36 (Aluflitter) erkennbar, die dem erfindungsgemäßen Polymer-Compoundmaterial 20 eine ansprechende optische Erscheinung geben.

In der Ausführungsform gemäß Figur 3 ist dem Matrixpolymermaterial 22 ein hoher Anteil an teilvernetztem rezykliertem Kunststoffmaterial 38 zugemischt. Das teilvernetzte rezyklierte Kunststoffmaterial 38 ist homogen bzw. dispers im Matrixpolymermaterial 22 verteilt und weist weiterhin Talkumpartikel 32 auf. Auch bei dieser Ausführung ist an den Außenflächen, also im Querschnitt an der Oberseite 26 und der Unterseite 28, stets Matrixpolymermaterial 22 angeordnet.

Selbstverständlich ist die Erfindung nicht auf die gezeigten Ausführungsbeispiele beschränkt, sondern umfasst auch weitere Varianten des Polymer-Compoundmaterials 20, die insbesondere andere Additive aufweisen können. Auch sind Mischformen der dargestellten Ausführungsvarianten denkbar.

Aus dem Stand der Technik ist ein derartiges Produkt mit den hier vorgestellten Eigenschaften nicht bekannt, für derartig hochwertiges Polymermaterial wird stets auf Neuware zurückgegriffen. Offensichtlich wurde bisher nicht erkannt, dass sich durch diese Art der Einmischung hochwertige Produkte herstellen lassen, die aktuell auch hinsichtlich Preis-Leistungsverhältnis eine durchaus wirtschaftlich interessante Nische abdecken und bei den absehbaren weiteren Preissteigerungen, vor allem bei erdölbasierten Rohstoffen in Kombination mit Rohstoffknappheit ein noch erhebliches Ausbaupotential besitzen. Das erfindungsgemäße Polymer-Compoundmaterial 20 kann somit auch zur Verringerung der Rohstoffabhängigkeit, mindestens aber zu einer erheblich verbesserten Material- und Energieeffizienz in der Kunststoffverarbeitung beitragen.

## Patentansprüche

1. Polymer-Compoundmaterial (20) für hochwertige Kunststoff-Anwendungen, gebildet aus einem innenliegenden homogen verteilten rezyklierten Kunststoffmaterial (24), umgeben von einem Matrixpolymermaterial (22) aus Polymer-Neuware.

2. Polymer-Compoundmaterial (20) nach Anspruch1,
**dadurch gekennzeichnet, dass das** Matrixpolymermaterial (22) aus Polymer-Neuware eine geringere Viskosität als das rezyklierte Kunststoffmaterial (24) aufweist.

3. Polymer-Compoundmaterial (20) nach Anspruch 1 oder Anspruch 2, **dadurch gekennzeichnet, dass** das rezyklierte Kunststoffmaterial (24) einer der nachfolgenden Gruppen zugeordnet werden kann:
- mit dem Matrixpolymermaterial (22) partiell verträglicher Kunststoff oder Kunststoffgemisch,
- mit dem Matrixpolymermaterial (22) unverträglicher Kunststoff oder Kunststoffgemisch,
- vernetztes Polymermaterial,
- anvernetzes Polymermaterial
- physikalisch/chemisch untrennbares oder verfahrenstechnisch nicht einfach trennbares Kunststoffverbundmaterial.

4. Polymer-Compoundmaterial (20) nach Anspruch 3, **dadurch gekennzeichnet, dass** das rezyklierte Kunststoffmaterial (24) Bestandteile aus mindestens zwei der nachfolgenden Gruppen aufweist:
- mit dem Matrixpolymermaterial (22) partiell verträglicher Kunststoff oder Kunststoffgemisch,
- mit dem Matrixpolymermaterial (22) unverträglicher Kunststoff oder Kunststoffgemisch,
- vernetztes Polymermaterial,
- anvernetzes Polymermaterial,
- physikalisch/chemisch untrennbares oder verfahrenstechnisch nicht einfach (z. B. mechanisch) trennbares Kunststoffverbundmaterial.

5. Polymer-Compoundmaterial (20) nach einem der Ansprüche 1 bis 4, **dadurch gekennzeichnet, dass** das innenliegende Kunststoffmaterial (24) weiterhin mindestens ein zusätzliches im Aufbereitungsprozess zugegebenes Additiv aufweist.

6. Polymer-Compoundmaterial (20) nach Anspruch 5, **dadurch gekennzeichnet, dass** es ein Additiv aus einem anorganischen Material beinhaltet.

7. Polymer-Compoundmaterial (20) nach Anspruch 6, **dadurch gekennzeichnet, dass** das Additiv ein mineralisches Material, vorzugsweise Talkum (32) ist.

8. Polymer-Compoundmaterial (20) nach Anspruch 6 oder 7, **dadurch gekennzeichnet, dass** der Anteil an Additiv im innenliegenden Kunststoffmaterial (24) etwa 5 bis 75 Gew.-%, vorzugsweise 25 bis 40 Gew.-% beträgt.

9. Polymer-Compoundmaterial (20) nach einem der Ansprüche 1 bis 8, **dadurch gekennzeichnet, dass** es als Folie ausgebildet ist, die im Querschnitt oben und unten Matrixpolymermaterial (22) aus Polymer-Neuware und dazwischen rezykliertes Kunststoffmaterial (24) aufweist.

10. Polymer-Compoundmaterial (20) nach einem der Ansprüche 1 bis 9, **dadurch gekennzeichnet, dass** das Matrixpolymermaterial (22) eine Grenzschichtdicke von 0,5 bis 10 µm, vorzugsweise 1 bis 6 µm, und das eingemischte Kunststoffmaterial (24) eine Phasen- bzw. Partikelabmessung von 1 bis 100 µm, vorzugsweise 5 bis 20 µm aufweist.

11. Verfahren zur Herstellung eines Polymer-Compoundmaterial, **gekennzeichnet durch die Verfahrensschritte,**
- Bereitstellen eines geeigneten, sauberen rezyklierten Kunststoffmaterialgemisches (24) mit definierter und konstanter Zusammensetzung,
- Mischen und Homogenisieren eines Matrixpolymermaterials (22) aus Polymer-Neuware mit dem Kunststoffmaterial (24),
- Aufschmelzen der Mischung aus rezykliertem Kunststoffmaterial (24) und Matrixpolymermaterial (22), wobei das Matrixpolymermaterial (22) im aufgeschmolzenem Zustand eine geringere Viskosität als das rezyklierte Kunststoffmaterialgemisch (24) aufweist,
- Verfestigen bzw. Aushärten der Mischung.

12. Verfahren nach Anspruch 11, **dadurch gekennzeichnet, dass** das Matrixpolymermaterial (22) aus einem thermoplastisch verarbeitbaren Material und das rezyklierte Kunststoffmaterial (24) aus thermoplastisch unverarbeitbaren Material (34) gebildet sind.

13. Verfahren nach Anspruch 12, **dadurch gekennzeichnet, dass** in einem ersten Verfahrensschritt das Matrixpolymermaterial (22) mit einem ersten Anteil an rezykliertem Kunststoffmaterial (24) zu einer ersten Mischung vermischt wird und dieser ersten Mischung anschließend weiteres rezykliertes Kunststoffmaterial (34) zugegeben wird.

14. Verfahren nach Anspruch 11, **dadurch gekennzeichnet, dass** das rezyklierte Kunststoffmaterial (24) und das Matrixpolymermaterial (22) aus einem thermoplastisch verarbeitbaren Material (30) gebildet sind und vor dem Zusammenmischen das Matrixpolymermaterials (22) aus Polymer-Neuware und das Kunststoffmaterial (30) jeweils aufgeschmolzen werden.

15. Verfahren nach einem der Anspruch 11 bis 14, **dadurch gekennzeichnet, dass** dem rezyklierten Kunststoffmaterial (24) und/oder dem Matrixmaterial mindestens ein Additiv zugegeben wird.

16. Verfahren nach einem der Ansprüche 11 bis 15, **dadurch gekennzeichnet, dass** das rezyklierte Kunststoffmaterial (24) Bestandteile aus mindestens zwei der nachfolgenden Gruppen aufweist:
- mit dem Matrixpolymermaterial (22) partiell verträglicher Kunststoff oder Kunststoffgemisch,
- mit dem Matrixpolymermaterial (22) unverträglicher Kunststoff oder Kunststoffgemisch,
- vernetztes Polymermaterial,
- anvernetzes Polymermaterial,
- physikalisch/chemisch untrennbares oder verfahrenstechnisch nicht einfach (z. B. mechanisch) trennbares Kunststoffverbundmaterial.
